# EUROPÄISCHE PATENTSCHRIFT

(11) **EP 1 741 583 B1**
(45) Veröffentlichungstag und Bekanntmachung des Hinweises auf die Patenterteilung: **26.03.2008**
(21) Anmeldenummer: 06012482.3
(22) Anmeldetag: 19.06.2006
(51) Int. Cl.: B60H 1/00, G10K 11/00

(54) **Luftführungselement für Kraftfahrzeuge**
Air duct element for vehicles
Elément d'un conduit d'air pour véhicule

(30) Priorität: 08.07.2005 DE 102005031969
(43) Veröffentlichungstag der Anmeldung: 10.01.2007
(73) Patentinhaber: REHAU AG + Co, 95111 Rehau (DE)
(72) Erfinder: Welzer, Jürgen, 95111 Rehau (DE)

(56) Entgegenhaltungen:
- EP-A1- 0 095 582
- EP-A1- 1 029 742
- EP-A2- 0 286 571
- DE-A1- 3 725 147

## Beschreibung

Die Erfindung betrifft ein Luftführungselement für Kraftfahrzeuge und einem daraus bestehenden Bausatz.

Aus dem Stand der Technik sind Luftführungselemente für Kraftfahrzeuge grundsätzlich bekannt. Diese Luftführungselemente werden beispielsweise zum Einbau in Innenraumbelüftungssystemen bei Kraftfahrzeugen verwendet.
So beschreibt beispielsweise die DE 38 30 346 A1 ein schalldämmendes/-absorbierendes Luftführungselement aus einem rohrförmigen Grundelement und einem mit diesem verbundenen schallabsorbierenden Material, wobei der Grundkörper in gewellter Strukturform vorliegt und Öffnungen aufweist sowie eine Schallabsorbermatte (Vliesmatte) umfasst, so dass die Schallabsorptionseigenschaften im Frequenzbereich von 200 bis 2000 Hz mittels dieser Vliesmatte verbessert werden.
Die DE 100 26 355 A1 beschreibt eine schalldämpfende Luftleitung für einen Luftansaugtrakt einer Brennkraftmaschine, insbesondere Kraftfahrzeug, bestehend aus einem Innenrohr mit einem außen teilweise anliegenden Dämmstoffmaterial, wobei das Innen-/Außenrohr und der Dämmstoffmantel aus Kunststoffen bestehen.
Die DE 33 02 363 A1 beschreibt ein Schallschluckertragwerk für ein Lufteinlassgehäuse einer Kraftfahrzeugklimaanlage, wobei längs der Seitenwände entfernbare oder einsetzbare Schallschluckerelemente in dafür vorgesehene Haltevorrichtungen eingesetzt sind.
Aus der DE 91 00 514 U1 entnimmt man ein Luftführungselement mit einem formstabilen, schallharten Kanalkörper, der aus Kunststoff wie Polypropylen besteht und Dämmteile umfasst, die an verschiedenen Stellen im Luftführungselement einsetzbar sind. Hierzu werden Schaumstoffformteile verwendet, die in unterschiedlicher Dicke und Größe - bevorzugt im Bereich von Krümmungsstellen - eingebracht sind. Damit soll der in diesen Bereichen erzeugte und durch Ansaugluft getragene Schallpegel innerhalb des Luftführungselements besser absorbiert werden.
Die EP 0095 582 A1 beschreibt einen schallgedämpften Strömungskanal, bei dem die Wände aus einem Verbund eines thermoplastisch geschlossenzelligen Schaumstoff als äußere und einem offenzellig elastischen Weichschaumstoff als innere Schicht bestehen. In der EP 0 286 571 A1 wird ein verbessertes Schallabsorberelement sowie ein Verfahren zu seiner Herstellung offenbart.

Nachteilig an diesem bekannten Stand der Technik ist, dass die verwendeten Materialien zur Verbesserung der Schalleigenschaften der Luftführungselemente aufgrund der Dichte und Materialzusammensetzung nur eingeschränkt die akustische Dämpfung in den für Menschen noch wahrnehmbaren Frequenzbereichen im Kraftfahrzeug bewirken.

Auch tritt bei herkömmlichen Luftführungskanälen - abhängig vom Verbauort im Kraftfahrzeug - ein hoher Temperaturverlust auf. Dieses Problem ist insbesondere bei Fondraumluftführungskanälen, die im Kontakt zum beispielsweise kalten Bodenblech des Kraftfahrzeugs liegen, bekannt. Gerade in der Winterzeit kann es deshalb dazu führen, dass der Fondraumpassagier mit unangenehmer kalter Luft in der Startphase angeströmt wird, bevor die Heizungsregelung innerhalb einer Zeitspanne von bis zu zehn Minuten diesen Kaltluftstrom in einen angenehmen und an der Heizungsregelung gewählten Temperaturbereich überführt. Der dabei auftretende Temperaturunterschied Δ T (Differenz der Temperatur im eingeschwungenen Zustand und Temperatur in der Startphase) wird wesentlich von der Länge des Luftführungskanals (Luftwegtransportstrecke) bestimmt und kann mehr als 30 ° K betragen. Erfahrungsgemäß sind die Temperaturunterschiede um so höher, desto tiefer die Außentemperaturen in der Umgebung des Kraftfahrzeuges liegen. Weiterhin sind die Luftführungselemente, die den Fahrzeuginnenraum beispielsweise mit klimatisierter Luft zu unterschiedlichen Zeiten versorgen, hinsichtlich ihrer schalltechnischen Auslegung heute von großer Bedeutung und finden insbesondere Eingang in das Design und die Auslegung der Luftversorgung sowie der Klimatisierung der Kraftfahrzeuginnenräume.

Von daher sind Entwicklungen mit der Zielsetzung, einer schalltechnischen Optimierung der Luftführungselemente/-systeme der aus Kunststoff ausgeführten Luftführungsformteile/elemente, eine wichtige Voraussetzung zur Erreichung der Schallschutzmaßnahmen im Kraftfahrzeug. Hierzu werden bekanntermaßen akustische Messungen an kompletten Kraftfahrzeugluftführungssystemen an entsprechend ausgelegten, akustischen Prüfständen vorgenommen.
Die Grundlage der Entstehung von akustischen Geräuschen bei Luftführungssystemen umfasst unterschiedliche akustische Anregungsvorgänge wie z.B. :
- die Anregung des Luftführungselements durch die Luftströmung,
- die Körperschallausbreitung auf der Luftführungselementinnen-/-außenwand,
- die Schallausbreitung über vorzusehende Halterungs-/Befestigungselemente und
- das Zusammenspiel der vorgenannten Anregungsvorgänge mit den baulichen Gegebenheiten eines Kraftfahrzeuges, d.h. dem akustischen Zusammenwirken aufgrund der vorliegenden Einbausituation.

Aufgabe der Erfindung ist es, ein Luftführungselement für Kraftfahrzeuge mit verbesserten akustischen und thermischen Isolationseigenschaften zu schaffen, sowie einen Bausatz hierzu anzugeben.

Erfindungsgemäß wird diese Aufgabe durch die technischen Merkmale gemäß Anspruch 1 für das Luftführungselement und gemäß Anspruch 21 für den Bausatz gelöst. Bevorzugte Ausgestaltungen des erfindungsgemäßen Luftführungselements und des Bausatzes sind Gegenstand von Unteransprüchen.

Dabei wurde erkannt, dass das Luftführungselement aus mindestens einer Schicht besteht, umfassend mindestens eine Schaumschicht und/oder mindestens eine Kompaktschicht, wobei der im Herstellungsverfahren einstellbare Porendurchmesser der Schaumschicht im Bereich von 20 bis 400 µm liegt und das der Porenflächen- und/oder Porenvolumenanteil der Schaumschicht, die auf einer Innen- und/oder Außenseite des Luftführungselements anliegend angeordnet ist, einen Anteil zwischen 25% bis 90% umfasst, wobei die Dicke der Schaumschicht im Wesentlichen im Bereich zwischen 2 bis 4 mm liegt und die Schaumschicht einen durch das Herstellungsverfahren eingestellten Gradienten in der Porenzahl und/oder Porengröße insbesondere in Richtung der Kompaktschichtoberfläche aufweist.

Die Schaumschicht und die Kompaktschicht bestehen jeweils aus einem thermoplastischen Material, vorzugsweise Polyethylen (PE), Acrylnitril-Butadien-Styrol-Copolymerisat (ABS), Polybutylen oder Polypropylen (PP) beziehungsweise auch aus Co-Blockpolymeren der Gruppe Polyethylen und/oder Polypropylen oder aus Polyamid (PA) sowie aus Blends der vorgenannten thermoplastischen Materialien.

Eine der Schichten - vorzugsweise die Kompaktschicht, aber nicht ausschließend - wird mit Füllstoffen versetzt, wobei in der Kompaktschicht anorganische und mineralische Füllstoffe, wie beispielsweise Steinwolle, Silicat, Ruß, Bariumsulfat, Titanoxide, Zinksulfide, Zirkoniumsilicate, Silberverbindungen oder Glas bzw. Keramik aber auch Fasergewebe oder Kevlar verwendet werden.

Der Füllstoffanteil liegt für jeden der vorgenannten Füllstoffe im Bereich von 5 bis 30 Gewichtsprozenten; auch sind Gemischkombinationen dieser Füllstoffe erfindungsgemäß vorgeschlagen, wobei der Gesamtfüllstoffgehalt mehrerer Füllstoffe ebenfalls im Bereich von 5 bis 30 Gewichtsprozenten bezogen auf das jeweils verwendete polymere Material gemäß der Ansprüche 2 bis 4 ist.
Mittels der eingebrachten Füllstoffe wird vorteilhaft eine Erhöhung der Schalldämpfungseigenschaften des Luftführungselements erreicht und zusätzlich dessen thermische Isolation verbessert.
Weiterhin wirken die mineralischen Füllstoffe, eingebracht in eine Schicht des Luftführungselements, flammenhemmend, d.h. diese Füllstoffe verbessern vorteilhaft die Flammfestigkeit von im Innenraum des Kraftfahrzeuges verbauten Luftführungselementen.

Die verwendeten Füllstoffe besitzen eine Korngröße von 3 bis 50 µm oder im Falle von faserhaltigen Füllstoffen eine Faserlänger im Bereich von 1 bis 3 mm.

Erfindungsgemäß wurde erkannt, dass auf der innenliegenden Seite des Luftführungselements, d.h. unmittelbar an der dort vorbeiströmenden Luft zugewandten Schichtoberfläche, ein in die dort befindliche Polymerschicht eingebrachter silberhaltiger Füllstoff, beispielsweise aus Silberoxidverbindungen oder Silberoxidkomplexverbindungen bestehend, vorteilhaft das bakterielle Wachstum entlang dieser Innenoberfläche des Luftführungselements hemmt beziehungsweise unterbindet. In diesem Zusammenhang ist denkbar, eine silberverbindungshaltige Schicht mittels physikalisch oder chemischen Beschichtungsverfahren (Plasmaverfahren, CVD-Verfahren) zusätzlich aufzubringen.

Weiterhin wurde erkannt, dass über chemische oder physikalische Treibmittel eine Schaumstruktur während des Extrusions-/Blasprozesses und/oder Spritzgussprozesses zur Herstellung des Luftführungselements erzeugt werden kann, so dass eine Dichte von 0,3 bis 0,6 g/cm³ einstellt wird, die vorteilhaft zu einer Gewichtsreduktion des Luftführungselements führt. Die erzeugte Wandstärke des Luftführungselements liegt etwa im Bereich von 2 bis 4 mm und verbessert durch das geringe Gewicht und die geschaffene Elastizität zusätzlich die Verbaufähigkeit eines Luftführungsbausatzes, d.h. einer Luftführungsstrecke bestehend aus mehreren verbundenen Luftführungselementen im Kraftfahrzeug.

Die Erfindung lehrt beispielsweise auch einen dreischichtigen Aufbau des Luftführungselements, wobei die Mittelschicht vorteilhafterweise aus einem mit Mineralstoff gefülltem polymeren Grundmaterial aus der Gruppe der Olefine besteht. Dazu werden die Füllstoffbeimengungen mittels eines chemischen oder physikalischen Treibmittels im Herstellungsprozess mit eingeschäumt, wobei die Dichte dieser geschäumten Schicht geringer ist, als die der verwendeten polymeren Materialien aus der Gruppe der Olefine. Die Mineralstoffbeimengung dient zusätzlich zur gezielten Einstellung der Elastizität des Luftführungselements. Weiterhin wurde in diesem Zusammenhang gefunden, dass die dadurch erzeugte polymere Kristallinität zu einer verbesserten Langzeitfestigkeit führt.

Auch sind funktionelle Anschlussbereiche an dem erfindungsgemäßen Luftführungselement mittels der Schaumblastechnik möglich, d.h. dass beispielsweise unterschiedliche Luftführungsabzweige und -formen, angepasst an die jeweilige Kraftfahrzeugeinbausituation, verwendbar und gestaltbar sind, wobei die entlang des geschäumten Luftführungselements einstellbare Dichte - zum Beispiel im Bereich von Abzweigungen oder Krümmungen - somit härter oder weicher eingestellt werden kann.
Durch diese Hart-/Weicheinstellung gezielter Bereiche - auch innerhalb des Steck-Nerbindungsabschnitts der Luftführungselemente - wird vorteilhaft der unter anderem im Betrieb des Kraftfahrzeuges durch die Fahrtstrecke bedingte und erzeugte akustische Körperschall entlang der Luftführungselementoberfläche gedämpft.
Dass durch das erfindungsgemäße Luftführungselement eine vorteilhafte zeitliche Reduktion des Temperaturunterschiedes in der Startphase zu dem zeitversetzten, nachgelagerten und eingeschwungenen Temperaturzustand erreicht wird, zeigt Tabelle 1.
Hierzu wurden Temperaturfühler am Eingang und Ausgang eines Luftführungselements eingesetzt und der zeitliche Temperaturverlauf mittels Messverstärker und Auswerterechner aufgezeichnet. Das Luftführungselement befindet sich zu Beginn der Messungen in einer Temperaturkammer auf einem Temperaturniveau von 273 °K. Durch die Eingangsöffnung des Luftführungselements wurde kontinuierlich 335 °K Warmluft mittels einer temperaturstabilisierten Gebläsevorrichtung eingeblasen und die Temperatur des austretenden Luftstroms zeitabhängig ermittelt.
In Tabelle 1 sind die Zeit in Minuten, die Eingangstemperatur des Luftstroms beim Eintritt in den erfindungsgemäßen Luftführungskanal und dessen Ausgangstemperatur sowie deren Differenztemperatur in °K für eine Luftführungskanalanordnung (Bausatz) von einem Meter Länge - eingebracht in eine Temperaturkammer mit einer Umgebungstemperatur Tᵤ = 273 °K - dargestellt.

**Tabelle 1: Temperaturmessergebnisse an einem Luftführungselement bei Tᵤ = 273 °K**

| Zeit in min | Eingangstemperatur °K | Ausgangstemperatur °K | Differenztemperatur °K |
|---|---|---|---|
| 0 | 273 | 273 | 0 |
| 1 | 302 | 291 | 11 |
| 2 | 312 | 301 | 11 |
| 3 | 331 | 319 | 12 |
| 4 | 335 | 327 | 8 |
| 5 | 335 | 328 | 7 |
| 6 | 335 | 328 | 7 |
| 7 | 335 | 328 | 7 |

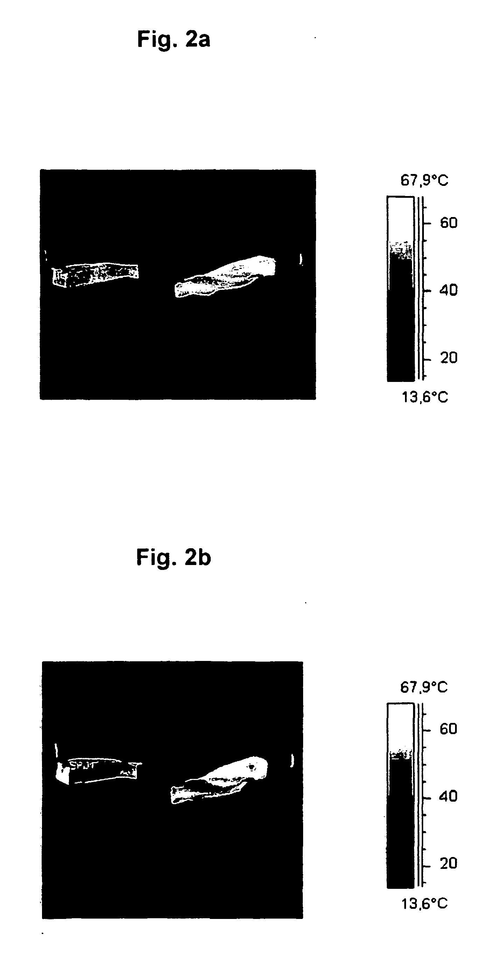

Wie aus Tabelle 1 ersichtlich, wird vorteilhaft ein stabiler und stationärer Temperaturdifferenzzustand bereits nach fünf Minuten mit dem erfindungsgemäßen Luftführungselement erreicht und damit die Zeit gegenüber herkömmlichen Luftführungselementen deutlich verringert.
Darüber hinaus wurden mittels einer Infrarotkamera der Firma Inframetrics (Typ SC 1000), die Oberflächentemperaturen eines Luftführungselements - wie in Figur 2 dargestellt - entlang dessen Oberfläche bestimmt.

Weitergehende Versuche an einer Ausströmungsdüsenöffnung - zum Beispiel im Bereich der B-Säule von verschiedenen Kraftfahrzeugen - erbrachten überraschenderweise eine um 9° K erhöhte Luftausströmungstemperatur innerhalb von fünf Minuten nach der Startphase durch die Verwendung des erfindungsgemäßen Luftführungselements und damit gegenüber dem bisherigen Serienstand eine wesentliche Verbesserung.

Vergegenwärtigt man sich, dass in zukünftigen Kraftfahrzeuggenerationen die Gesamtlänge von Luftführungselementen/-kanälen in etwa im Bereich von 4 bis 8 Metern liegt, so werden durch die erfindungsgemäßen Luftführungselemente (in einer Gesamtanordnung) im Sinne eines Bausatzes verbesserte Energieeffizienzwerte erreicht und die Fahrgastzelle bzw. deren Fondbereiche im zeitlichen Verlauf früher in den gewünschten Temperaturbereich überführt. Hierdurch wird gesamthaft ein verbessertes Wohlbefinden der Fahrzeuginsassen in der Winterzeit und zeitlich optimiert nach dem Fahrtantritt erreicht.

Die Erfindung lehrt weiterhin, dass durch das Luftführungselement eine schalltechnische Verbesserung im Fahrzeuginnenraum geschaffen wird, wobei der Schallpegel um 3 bis 5 dB im hörbaren Frequenzbereich von 300 bis 5000 Hz reduziert wird.

Auch wurde erkannt, dass eine schnellere und damit wirtschaftlichere Montage mit dem erfindungsgemäßen Luftführungselement erreicht wird, da gerade in dem komplexen und kompakten zukünftigen Kraftfahrzeuginnenraum unterschiedliche und durch das Design beeinflusste Einbaugeometrien vorliegen können, die spezifische Form- und Verbindungsauslegungen der Luftführungselemente bedingen und im Kraftfahrzeug sicher verbunden und verbaut werden müssen. Hier hilft die in den Verrast- und Steckbereichen am Luftführungselement erfindungsgemäß gefundene Hart-/Weicheinstellung gemäß Anspruch 21, dass diese Schwierigkeiten überwunden werden, so dass ein zuverlässiger, luftdichter und zusammensteckbarer Bausatz, bestehend aus mehreren Luftführungselementen, nach Anspruch 24 geschaffen wird.

Weiterhin wurde erkannt, dass der Bausatz unter anderem zu einer verbesserten mechanischen Stabilität im Bereich des vorderen und hinteren Fondkanals im Fahrzeug führt und damit eine akustische Dämpfung im Innenraum um 3 bis 5 dB erreicht wird.
Auch die Trittfestigkeit des Bausatzes, angeordnet im Unterbodenbereich des Kraftfahrzeuges, wird ebenfalls vorteilhaft verbessert.
In diesem Zusammenhang lehrt die Erfindung, dass die Steck- und/oder Rastverbindungen des Luftführungselements und der aus mehreren Luftführungselementen geschaffene Bausatz, einen Einfluss auf den Innenraumgeräuschpegel eines Kraftfahrzeuges nimmt, wobei die geometrische und materialseitige Auslegung der Verbindungs-/Steckeingriffe der einzelnen Luftführungselemente eines Bausatzes gegenüber den bisher aus dem Stand der Technik bekannten Luftführungselementen, nicht zu Leckagen führt. Diese Leckagen können Luftvolumina umfassen, die bekanntermaßen im Bereich von 2 bis 8 m³/h liegen und so zu akustischen hörbaren Oberflächenschwingungen oder Schwingungsresonanzen während des Ausströmens am Leckageort beitragen. Der aus dem Stand der Technik bekannte und als nachteilig angesehene so erzeugte akustische Körperschall, entlang der Luftführungsstrecke (Bausatz) übertragen und in einem für den Menschen wahrnehmbaren Frequenzbereich von 300 Hz bis 5000 Hz liegend, wird somit durch den erfindungsgemäßen Bausatz nach Anspruch 25 vorteilhaft gedämpft.

Weiterhin wurde in diesem Zusammenhang auch erkannt, dass eine alternierende Hart-Weich-Material-Einstellung für den Abschnitt der Verbindungs-/Steckeingriffe, bestehend aus einer Materialzusammensetzung LDPE (Low- Density Polyethylen) und/oder HDPE (High-Density Polyethylen), die akustischen Dämpfungseigenschaften für einen Bausatz umfassend mehrere Luftführungselemente somit nochmals verbessert.

Weiterhin wurde als vorteilhaft angesehen, dass ein Bausatz bestehend aus mehreren Luftführungselementen, bei dem die einzelnen Luftführungselemente mit einer innenliegenden silberverbindungshaltigen gefüllten, polymeren Schicht versehen sind - auch in einer abschnittsweisen Anordnung - d.h. der dem Luftstrom zugewandten Seite wirkend, das bakterielle Wachstum auf der Innenseite des Bausatzes hemmt. Dies ist insbesondere im Bereich der Luftausströmung in den Fahrgastraum vorteilhaft.

Das erfindungsgemäße Luftführungselement wird im Extrusions-Blasverfahren und/oder Spritzgussverfahren hergestellt.

Es zeigen:
- Figur 1: eine Mikroskopaufnahme eines Luftführungselementabschnitts in Schnittdarstellung;
- Figur 2a: eine Infrarotaufnahme zur Ermittlung der Oberflächentemperaturverteilung eines Luftführungselements innerhalb eines Zeitfensters von 3 Minuten während einer geregelten Warmluftzuführung von T= 68 °C und bei einer Klimakammertemperatur von Tᵤ =273 °K ;
- Figur 2b: eine Infrarotaufnahme zur Ermittlung der Oberflächentemperaturverteilung eines Luftführungselements innerhalb eines Zeitfensters von 5 Minuten während einer geregelten Warmluftzuführung von T= 68 °C und bei einer Klimakammertemperatur von Tᵤ =273 °K

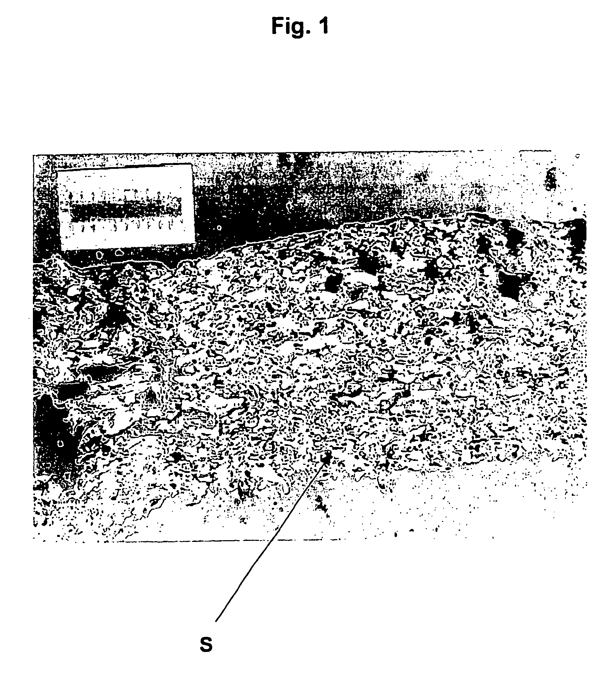

Figur 1 zeigt eine Mikroskopaufnahme in einer Schnittdarstellung des erfindungsgemäßen Luftführungselements.

Wie man daraus erkennt, ist der mittlere Porendurchmesser der aufgebrachten Schaumschicht in der Schnittebene - in der Figur 1 mit S bezeichnet - im Größenbereich von 20 bis 400 µm. Die Zahl der Poren pro Flächeneinheit in diesem Ausführungsbeispiel beträgt ca. 50-150 Poren/mm².

In einer weiteren, aber nicht näher dargestellten Ausgestaltung der Erfindung, kann eine Schichtfolge des Luftführungselements, bestehend aus einer Kompaktschicht und einer darauf folgenden Schaumschicht, auch in einer mehrschichtigen Anordnung im Sinne eines sandwichartigen Schichtaufbaus ausgeführt sein. D.h., dass beispielsweise eine alternierende Folge von derartigen Doppelschichten in Luftführungselementen durch das Extrusionsblasverfahren und/oder Spritzgussverfahren hergestellt wird, wobei die verwendeten polymeren Materialien und anorganischen Füllstoffe gemäß der Ansprüche 2 bis 14, auch in einer Kombination untereinander, den jeweiligen Schichtaufbau der Kompaktschicht/Schaumschicht ergeben.

Figur 2a und Figur 2 b zeigen einen mittels Infrarotkamera aufgenommene Oberfläche eines Luftführungselements und die ermittelte Oberflächentemperaturverteilung entlang dieses Abschnitts, aufgenommen innerhalb eines Zeitfensters nach 3 bzw. 5 Minuten während der Warmluftzuführung mit einer Warmlufttemperatur von 68 ° C, wobei das Luftführungselement hierzu in eine Klimakammer mit einer Umgebungstemperatur von Tᵤ =273 °K eingebracht ist. Aus der gemessenen Temperaturverteilung erkennt man, dass innerhalb eines Zeitraums von bis zu fünf Minuten eine homogene Temperaturverteilung entlang der Oberfläche des erfindungsgemäßen Luftführungselements erzeugt wird. Experimente an mehreren in einer Gesamtlänge von 6 bis zu 8 Metern zusammengesteckten Luftführungselementen (entspricht der verwendeten Bausatzlänge im Kraftfahrzeug) ergaben gleiche Ergebnisse, die nicht weiter dargestellt sind.

## Patentansprüche

1. Luftführungselement für Kraftfahrzeuge, **gekennzeichnet durch** die Kombination der folgenden Merkmale, dass das Luftführungselement aus
-a- mindestens einer Schaumschicht und einer Kompaktschicht besteht, wobei
-b- der Durchmesser der Poren der Schaumschicht zwischen 20 bis 400 µm liegt und
-c- der Porenflächen- und/oder -volumenanteil der Schaumschicht zwischen 25 % und 90% beträgt und
-d- die Dicke der Schaumschicht zwischen 2 bis 4 mm liegt, wobei
-e- die Schaumschicht einen eingestellten Gradienten in der Porenanzahl und/oder in der Porengröße aufweist, insbesondere in Richtung der Kompaktschichtoberfläche.

2. Luftführungselement für Kraftfahrzeuge nach Anspruch 1, **dadurch gekennzeichnet, dass** das Luftführungselement aus einem thermoplastischen Material besteht.

3. Luftführungselement für Kraftfahrzeuge nach Anspruch 2, **dadurch gekennzeichnet, dass** das thermoplastische Material aus einem PE und/oder ABS und/oder Polybutylen und/oder PP und/oder Polyamid besteht.

4. Luftführungselement für Kraftfahrzeuge nach Anspruch 3, **dadurch gekennzeichnet, dass** das thermoplastische Material aus Co-Blockpolymeren der Gruppe PE und/oder PP besteht.

5. Luftführungselement für Kraftfahrzeuge nach einem der Ansprüche 2 bis 4, **dadurch gekennzeichnet, dass** die Schaumschicht und/oder die Kompaktschicht aus einem Blend gemäß der Materialien nach Anspruch 3 und 4 besteht.

6. Luftführungselement für Kraftfahrzeuge nach einem der Ansprüche 1 bis 5, **dadurch gekennzeichnet, dass** die Kompaktschicht Füllstoffe enthält mit einem Gewichtsanteil von 5 bis 30 %.

7. Luftführungselement für Kraftfahrzeuge nach einem der Ansprüche 1 bis 5, **dadurch gekennzeichnet, dass** die Schaumschicht Füllstoffe enthält mit einem Gewichtsanteil von 5 bis 30 %.

8. Luftführungselement für Kraftfahrzeuge nach einem der Ansprüche 6 und 7, **dadurch gekennzeichnet, dass** die Füllstoffe mineralische oder anorganische Füllstoffe sind.

9. Luftführungselement für Kraftfahrzeuge nach Anspruch 8, **dadurch gekennzeichnet, dass** der Füllstoff aus: Steinwolle oder Silicat oder Ruß oder Bariumsulfat oder Titanoxid oder Zinksulfid oder Zirkoniumsilicat oder Silberverbindungen oder Glas oder Keramik besteht.

10. Luftführungselement für Kraftfahrzeuge nach einem der Ansprüche 8 oder 9, **dadurch gekennzeichnet, dass** die Füllstoffe eine Korngröße von 3 bis 50 µm besitzen.

11. Luftführungselement für Kraftfahrzeuge nach einem der Ansprüche 1 bis 9, **dadurch gekennzeichnet, dass** die Füllstoffe aus Fasern bestehen.

12. Luftführungselement für Kraftfahrzeuge nach Anspruch 11, **dadurch gekennzeichnet, dass** die Faser aus Kevlar besteht.

13. Luftführungselement für Kraftfahrzeuge nach einem der Ansprüche 11 bis 12, **dadurch gekennzeichnet, dass** der faserhaltige Füllstoff eine Faserlänge von 1 bis 3 mm hat.

14. Luftführungselement für Kraftfahrzeuge nach einem der Ansprüche 9 bis 13, **dadurch gekennzeichnet, dass** die Füllstoffe sich in einer Füllstoffkombination zu 5 bis 30% Gewichtsanteilen ergänzen.

15. Luftführungselement für Kraftfahrzeuge nach einem der vorgenannten Ansprüche, **dadurch gekennzeichnet, dass** eine eine Silberverbindung enthaltende innenliegende und dem Luftstrom zugewandte Schicht das bakterielle Wachstum hemmt.

16. Luftführungselement für Kraftfahrzeuge nach Anspruch 15, **dadurch gekennzeichnet, dass** die Silberverbindung eine Silberoxidverbindung oder Silberoxidkomplexverbindung ist.

17. Luftführungselement für Kraftfahrzeuge nach einem der vorgenannten Ansprüche, **dadurch gekennzeichnet, dass** ein Luftführungselement aus einem alternierenden mehrschichtigen Aufbau aus einer Kompaktschicht/Schaumschicht besteht oder aus einer mehrlagigen Sandwichschicht besteht.

18. Luftführungselement für Kraftfahrzeuge nach Anspruch 17, **dadurch gekennzeichnet, dass** eine mittlere Schicht eines mehrschichtigen Luftführungselements Füllstoffe nach einem der Ansprüche 8 bis 13 enthält.

19. Luftführungselement für Kraftfahrzeuge nach einem der vorgenannten Ansprüche, **dadurch gekennzeichnet, dass** eine Hart-Weichmaterialeinstellung innerhalb des Steck-Nerbindungsabschnittes besteht und das Material für diesen Abschnitt aus einem Polyethylen niedriger Dichte (LDPE) und/oder einem Polyethylen hoher Dichte (HDPE) besteht.

20. Luftführungselement für Kraftfahrzeuge nach einem der vorhergehenden Ansprüche, **dadurch gekennzeichnet, dass** eine geschäumte Schicht einen eingestellten Gradienten in der Porenanzahl und in der Porengröße pro Volumeneinheit vom Außenbereich der geschäumten Schicht hin zur Oberfläche der Kompaktschicht aufweist, insbesondere einen Gradienten umfasst, der dem Verlauf einer Treppenfunktion entspricht.

21. Bausatz bestehend aus mindestens zwei Luftführungselementen nach einem der Ansprüche 1 bis 20 für den Bereich der Mittelkonsole und/oder für den Fondbereich und/oder den Unterbodenbereich und/oder den Bereich der A-,B-,C-Säule und/oder den Bereich der Instrumententafel und/oder den Bereich des Dachhimmels eines Kraftfahrzeuges.

22. Bausatz nach Anspruch 21, **dadurch gekennzeichnet, dass** eine alternierende Hart-Weich-Material-Verbindung im Abschnitt der Verbindungs-/Steckeingriffe der Luftführungselemente bestehend aus einer Materialzusammensetzung LDPE und/oder HDPE eine akustische Körperschalldämpfung bewirkt.

23. Bausatz nach Anspruch 21, **dadurch gekennzeichnet, dass** es mindestens ein Luftführungselement mit einem Füllstoff aus einer Silberverbindung für den Bereich der Luftausströmung in den Kraftfahrzeuginnenraum aufweist.

24. Bausatz bestehend aus Luftführungssystemen nach einem der Ansprüche 21 bis 23, **dadurch gekennzeichnet, dass** die Luftführungselemente im Extrusions-Blasverfahren und/oder Spritzgussverfahren hergestellt sind.

## Claims

1. Air duct element for motor vehicles, **characterized by** the combination of the following features: that the air duct element comprises
-a- at least one foam layer and a compact layer, wherein
-b- the diameter of the pores of the foam layer lies between 20 and 400 µm and
-c- the proportion of the foam layer that is made up by the surface area and/or volume of the pores is between 25% and 90% and
-d- the thickness of the foam layer lies between 2 and 4 mm, wherein
-e- the foam layer has a set gradient in the number of pores and/or in the size of pores, in particular in the direction of the surface of the compact layer.

2. Air duct element for motor vehicles according to Claim 1, **characterized in that** the air duct element consists of a thermoplastic material.

3. Air duct element for motor vehicles according to Claim 2, **characterized in that** the thermoplastic material consists of a PE and/or ABS and/or polybutylene and/or PP and/or polyamide.

4. Air duct element for motor vehicles according to Claim 3, **characterized in that** the thermoplastic material consists of block copolymers of the PE and/or PP group.

5. Air duct element for motor vehicles according to one of Claims 2 to 4, **characterized in that** the foam layer and/or the compact layer consists of a blend based on the materials according to Claims 3 and 4.

6. Air duct element for motor vehicles according to one of Claims 1 to 5, **characterized in that** the compact layer contains fillers in a proportion by weight of from 5 to 30%.

7. Air duct element for motor vehicles according to one of Claims 1 to 5, **characterized in that** the foam layer contains fillers in a proportion by weight of from 5 to 30%.

8. Air duct element for motor vehicles according to either of Claims 6 and 7, **characterized in that** the fillers are mineral or inorganic fillers.

9. Air duct element for motor vehicles according to Claim 8, **characterized in that** the filler comprises: rock wool or silicate or carbon black or barium sulphate or titanium oxide or zinc sulphide or zirconium silicate or silver compounds or glass or ceramic.

10. Air duct element for motor vehicles according to either of Claims 8 and 9, **characterized in that** the fillers have a grain size of from 3 to 50 µm.

11. Air duct element for motor vehicles according to one of Claims 1 to 9, **characterized in that** the fillers comprise fibres.

12. Air duct element for motor vehicles according to Claim 11, **characterized in that** the fibres consist of Kevlar.

13. Air duct element for motor vehicles according to either of Claims 11 and 12, **characterized in that** the fibre-containing filler has a fibre length of from 1 to 3 mm.

14. Air duct element for motor vehicles according to one of Claims 9 to 13, **characterized in that** the fillers supplement one another in a filler combination to make up proportions of 5 to 30% by weight.

15. Air duct element for motor vehicles according to one of the preceding claims, **characterized in that** an inner layer, containing a silver compound and facing the air flow, inhibits bacterial growth.

16. Air duct element for motor vehicles according to Claim 15, **characterized in that** the silver compound is a silver oxide compound or silver oxide complex compound.

17. Air duct element for motor vehicles according to one of the preceding claims, **characterized in that** an air duct element comprises an alternating multilayered structure of a compact layer/foam layer or comprises a multiply sandwich layer.

18. Air duct element for motor vehicles according to Claim 17, **characterized in that** a middle layer of a multilayered air duct element contains fillers according to one of Claims 8 to 13.

19. Air duct element for motor vehicles according to one of the preceding claims, **characterized in that** a hard-soft material setting exists within the plugin/connecting portion and the material for this portion consists of a low-density polyethylene (LDPE) and/or a high-density polyethylene (HDPE).

20. Air duct element for motor vehicles according to one of the preceding claims, **characterized in that** a foamed layer has a set gradient in the number of pores and in the size of pores per volume unit from the outer region of the foamed layer to the surface of the compact layer, in particular comprises a gradient that corresponds to the progression of a staircase function.

21. Construction kit comprising at least two air duct elements according to one of Claims 1 to 20 for the region of the central console and/or for the rear region and/or the underfloor region and/or the region of the A, B, C pillars and/or the region of the dashboard and/or the region of the roof liner of a motor vehicle.

22. Construction kit according to Claim 21, **characterized in that** an alternating hard-soft material combination in the portion of the connecting/plug-in engagement features of the air duct elements, comprising an LDPE and/or HDPE material composition, brings about the effect of damping acoustic structure-borne sound.

23. Construction kit according to Claim 21, **characterized in that** it has at least one air duct element with a filler comprising a silver compound for the region of the air outflow into the passenger compartment of a motor vehicle.

24. Construction kit comprising air duct systems according to one of Claims 21 to 23, **characterized in that** the air duct elements are produced by the extrusion blow-moulding process and/or injection-moulding process.

## Revendications

1. Elément d'amenée d'air pour véhicules automobiles, **caractérisé par** la combinaison des caractéristiques suivantes, à savoir que l'élément d'amenée d'air
-a- est constitué d'au moins une couche de mousse et d'une couche compacte,
-b- le diamètre des pores de la couche de mousse étant compris entre 20 et 400 µm,
-c- la proportion en surface et/ou en volume des pores de la couche de mousse étant comprise entre 25 % et 90 % et
-d- l'épaisseur de la couche de mousse étant comprise entre 2 et 4 mm,
-e- le gradient du nombre des pores et/ou de la taille des pores de la couche de mousse étant fixé, en particulier en direction de la surface de la couche compacte.

2. Elément d'amenée d'air pour véhicules automobiles selon la revendication 1, **caractérisé en ce que** l'élément d'amenée d'air est constitué d'un matériau thermoplastique.

3. Elément d'amenée d'air pour véhicules automobiles selon la revendication 2, **caractérisé en ce que** le matériau thermoplastique est constitué de PE et/ou d'ABS et/ou de polybutylène et/ou de PP et/ou de polyamide.

4. Elément d'amenée d'air pour véhicules automobiles selon la revendication 3, **caractérisé en ce que** le matériau thermoplastique est constitué de copolymères séquences du groupe du PE et/ou du PP.

5. Elément d'amenée d'air pour véhicules automobiles selon l'une des revendications 2 à 4, **caractérisé en ce que** la couche de mousse et/ou la couche compacte sont constituées d'un mélange des matériaux selon les revendications 3 et 4.

6. Elément d'amenée d'air pour véhicules automobiles selon l'une des revendications 1 à 5, **caractérisé en ce que** la couche compacte contient des charges à une teneur pondérale de 5 à 30 %.

7. Elément d'amenée d'air pour véhicules automobiles selon l'une des revendications 1 à 5, **caractérisé en ce que** la couche de mousse contient des charges à une teneur pondérale de 5 à 30 %.

8. Elément d'amenée d'air pour véhicules automobiles selon l'une des revendications 6 et 7, **caractérisé en ce que** les charges sont des charges minérales ou non organiques.

9. Elément d'amenée d'air pour véhicules automobiles selon la revendication 8, **caractérisé en ce que** les charges sont constituées de laine de roche, de silicate, de noir de carbone, de sulfate de baryum, d'oxyde de titane, de sulfure de zinc, de silicate de zirconium, de composés d'argent, de verre ou de céramique.

10. Elément d'amenée d'air pour véhicules automobiles selon l'une des revendications 8 ou 9, **caractérisé en ce que** les charges ont une granulométrie comprise entre 3 et 50 µm.

11. Elément d'amenée d'air pour véhicules automobiles selon l'une des revendications 1 à 9, **caractérisé en ce que** les charges sont constituées de fibres.

12. Elément d'amenée d'air pour véhicules automobiles selon la revendication 11, **caractérisé en ce que** les fibres sont constituées de kevlar.

13. Elément d'amenée d'air pour véhicules automobiles selon l'une des revendications 11 à 12, **caractérisé en ce que** les charges contenant des fibres ont des fibres d'une longueur de 1 à 3 mm.

14. Elément d'amenée d'air pour véhicules automobiles selon l'une des revendications 9 à 13, **caractérisé en ce que** les charges se complètent en une combinaison de charges pour former une proportion pondérale de 5 à 30 %.

15. Elément d'amenée d'air pour véhicules automobiles selon l'une des revendications précédentes, **caractérisé en ce qu'**une couche intérieure contenant un composé d'argent et tournée vers l'écoulement d'air freine la croissance bactérienne.

16. Elément d'amenée d'air pour véhicules automobiles selon la revendication 15, **caractérisé en ce que** le composé d'argent est un composé d'oxyde d'argent ou un composé complexe d'oxyde d'argent.

17. Elément d'amenée d'air pour véhicules automobiles selon l'une des revendications précédentes, **caractérisé en ce qu'**un élément d'amenée d'air est constitué d'une structure en plusieurs couches alternées de couches compactes/couches de mousse ou d'une couche sandwich multicouches.

18. Elément d'amenée d'air pour véhicules automobiles selon la revendication 17, **caractérisé en ce qu'**une couche centrale d'un élément d'amenée d'air multicouches contient des charges selon l'une des revendications 8 à 13.

19. Elément d'amenée d'air pour véhicules automobiles selon l'une des revendications précédentes, **caractérisé en ce qu'**un réglage entre matériaux durs/mous est prévu à l'intérieur de la partie d'enfichage/liaison et **en ce que** le matériau pour cette partie est constitué d'un polyéthylène à basse densité (LDPE) et/ou d'un polystyrène à haute densité (HDPE).

20. Elément d'amenée d'air pour véhicules automobiles selon l'une des revendications précédentes, **caractérisé en ce que** le gradient du nombre des pores et de taille des pores par l'unité de volume d'une couche de mousse est fixé entre la partie extérieure de la couche de mousse et la surface de la couche compacte et en particulier **en ce que** le gradient correspond à l'évolution d'une fonction en escalier.

21. Ensemble constitué d'au moins deux éléments d'amenée d'air selon l'une des revendications 1 à 20, pour la partie constituée de la console centrale, la partie de fond, la partie de plancher, la partie constituée des colonnes A, B, C, la partie constituée du tableau de bord et/ou la partie constituée par le plafond d'un véhicule automobile.

22. Ensemble selon la revendication 21, **caractérisé en ce qu'**une liaison alternée entre matériau dur et matériau mou dans la partie des engagements de liaison/enfichage des éléments d'amenée d'air, constituée d'une composition des matériaux LDPE et/ou HDPE, a pour effet un amortissement acoustique du bruit de la carrosserie.

23. Ensemble selon la revendication 21, **caractérisé en ce qu'**il présente au moins un élément d'amenée d'air doté d'une charge en un composé d'argent dans la zone de l'entrée de l'air dans l'habitacle du véhicule automobile.

24. Ensemble constitué de systèmes d'amenée d'air selon l'une des revendications 21 à 23, **caractérisé en ce que** les éléments d'amenée d'air sont fabriqués par un procédé d'extrusion-soufflage et/ou un procédé de moulage par injection.
